# EUROPEAN PATENT APPLICATION

(11) **EP 4 717 060 A1**
(43) Date of publication of application: **01.04.2026**
(21) Application number: 24199619.8
(22) Date of filing: 10.09.2024
(51) Int. Cl.: A01B 49/02

(54) **STRIP-TILL DEVICE**

(71) Applicant: Czajkowski Maszyny Sp. z o.o., 87-400 Sokolowo (PL)
(72) Inventor: Czajkowski, Maciej, Sokolowo (PL)
(74) Representative: Wroblewski, Marcin Jan

(57) **Abstract**

The subject of the invention is a strip-till device, comprising a main frame (1) configured to connect to an agricultural tractor and comprising working tools for soil cultivation arranged in rows, including splitting and tearing discs (2), a disc coulter (3), a loosening tine (4) with a fertiliser coulter (5), a finger row cleaner (4) and/or cultivating firming discs (23) and a compacting and levelling roller (8). The invention is characterised in that the row of working tools for soil cultivation comprises at least one tiller (7). The working tools for soil cultivation in a single row are arranged in the following order: the splitting and tearing discs (2), the disc coulter (3), the loosening tine (4) with the fertiliser coulter (5), the finger row cleaner (6) and/or the splitting and tearing discs (23), the tiller (7) and the compacting and levelling roller (8).

## Description

The invention relates to a strip-till device, used in agriculture, for a tillage in strip-till systems, in particular for seeding vegetables, including those of the celery (*Apiaceae*) and garlic (*Alliaceae*) families. Strip-till consists in the cultivation of narrow strips of the field area where the seeds are seeded, accompanied by the prior deep loosening of those strips of the field.

The patent application no. US 20220210962 A1 discloses a strip-till device working section comprising a frame to which, in the order of passage of the strip-till device, the working tools are connected: splitting and tearing discs for cleaning ridges from vegetable residues and other impurities, disc coulter, loosening tine and cultivating firming discs behind which a string roll is located. The splitting and tearing discs are mounted in the immediate vicinity of the disc coulter and are aligned. Each of the splitting and tearing discs is mounted on a corresponding arm having proximal end and distal end so that the proximal end of the arm is connected to a support mounting the disc coulter, while at the distal end the splitting and tearing disc is pivotally mounted. The solution provides an efficient ridge cleaning system that allows effective removal of impurities before planting seeds.

The patent no. US 11558988 B2 discloses a working section of an agricultural device for strip-till of soil. The working section comprises a frame with which, in the order of passage of the strip-till device, the working tools are connected: splitting and tearing discs, cultivating firming discs behind which there is a string roller comprising chain assemblies. The string roller is connected to the device frame by bracket; wherein on the support an axle is mounted on which there is a pair of discs between which chain assemblies are extended. The axle, disc pair and chain assemblies define the design of the string roller. When the disc pair is rotated, the chain assemblies tangle with the soil, leaving a fine, smooth and loosened strip of soil.

From the patent no. PL 221452 B1 a row strip-till device is known, comprising the frame on which the working tools are mounted. The frame consists of a front transverse section and a rear transverse section combined together with longitudinal sections. Cultivator teeth, drum with milling discs driven by power take-off shaft gears, and the string roller are mounted on the frame in the direction of passage of this device. Each cultivator tooth is equipped with a double-sided heart-shaped drill coulters. Longitudinal structural shapes in central area have plate girders with bearing seats in which the spigots of a milling drum having mounted milling discs are mounted. Each milling disc has three angular knives arranged symmetrically and radially. The working tools are mounted on the width of the frame at spaced intervals equal to the width of the strip-till rows. The exception applies to the string roller which has a size corresponding to the entire width of the device. The solution allows deep loosening of the soil with the cultivator teeth and shallow loosening of the soil risen by the cultivator teeth with angular knives, levelling of its surface and furnishing with the string roller.

The patent application no. US 20240065124 A1 discloses the working section of a strip-till device. The working section has a frame for suspending it. The following working tools are connected to the frame in the order of passage of the strip-till device: splitting and tearing discs, central cutting discs with side cutting discs, loosening tine with side limiting discs and conditioning wheel assembly. The conditioning wheel assembly is mounted on a pivoted out arm articulated with the frame and using an adjustable stress spring pressing the conditioning wheel assembly to the ground. The conditioning wheel assembly is configurable for adaptation to different soil conditions, including wet soil. For this purpose, the conditioning wheel assembly comprises two discs having interchangeable conditioning fingers mounted to the perimeter in the form of rectangular plates. The conditioning fingers on both discs are mounted alternately. The purpose of the conditioning wheel assembly is to break up the earth clods and to ensure that the cultivated soil strip is mixed. The soil on the surface of the cultivated soil strip is aerated to facilitate drying in humid soils, resulting in the proper characteristics of the seed bed. The mode of operation of the conditioning wheel assembly depends on the speed at which the strip-till device moves and changes to more aggressive as the speed of the strip-till device increases.

The patent no. WO 2022208185 A1 discloses a working section of an agricultural combined cultivator comprising working tools mounted on a support frame in the direction of passage of the strip-till device. The support frame itself is equipped with means to connect to the combined cultivator and has a mounted pair of splitting and tearing discs tilted one to another and connected to the support frame by a damper, a disc coulter, a loosening tine having a fertiliser coulter and pivotally mounted to the support frame, and a pair of cultivating firming discs. Using a damper connecting the splitting and tearing discs to the support frame allows for adjusting the pressing force of the splitting and tearing discs and to actively copy the soil. The splitting and tearing disc pair is mounted with the front edges of the splitting and tearing discs offset in a straight line parallel to the direction of movement of the working section, whereby the splitting and tearing discs can be cleared of soil and plant residues. On the support frame a pair of monolithic actuator supports is mounted on which the actuator connected to the loosening tine is embedded. The actuator and bracket of the loosening tine allows the loosening tine to be folded, which is applicable to road travels. In addition, each cultivating firming disc is connected to the support frame via an angular bracket.

From the patent no. LT 6099 B, a strip-till and seeding device comprising a frame with working tools attached in the direction of passage of the strip-till device is known: finger row cleaner for cleaning ridges from plant residues, forged coulter for soil deep cultivation, loosening discs, drill coulter for forming the seed bed, grain tank, grain dispenser, seed sowing plates and seed pressing roll. The design of the device enables rapid and easy replacement of working parts. The disclosed design prevents the working parts from getting clogged with vegetable residues and allows both strip-till cultivation and sowing seeds in a single run. The soil cultivation conditions may be adjusted by changing the position of the working parts on the frame. In addition to working tools, a support wheel is connected to the frame.

The patent no. US 7017675 B2 reveals a single-run basic cultivation device that provides a combination of shallow and deep soil cultivation, cutting and mixing post-harvest residues, as well as reducing clods and levelling the field to prepare the field for the next sowing. The device comprises a multi-part frame, the parts of which are articulated one with another, and which is equipped with hydraulic cylinders to control the position of the individual parts of the frame in order to position them in the lower operation position and the upper transportation position. The following working tools located in the front of the device are attached to the frame in the direction of passage of the strip-till device: finger row cleaners, disc coulters and toothed coulters. Disc coulters grind and cut the soil so that it does not accumulate on the toothed coulters. However, at the back of the device there is a group of concave-and-convex conditioning discs which mix post-harvest residues with the soil behind the toothed coulters, reduce size of clods and level the field. The conditioning discs of this group are spaced in at least two transverse rows, namely the front and the rear row. The device leaves a levelled and smooth field prepared for sowing with possible clods of small sizes.

From the patent no. US 5499685, a row device for soil conditioning prior to planting is known, along with a mechanism for the first cutting of the row ridge opening in the soil during a single run. The device comprises a frame suitable for connection to an agricultural tractor and equipped with a pair of wheels. Before the first wheel there are cutting means, for example in the form of a cutting disc, which cut the residues in the field, in particular plant residues. At the same time, the cutting means cut the furrow in the soil. However, behind the first wheel there is an extendable and retractable subsoiler with chisel. Behind it there are disc coulters mounted on separated parts of the bracket. The next element of the device is the second wheel behind which a seeder is mounted. During operation, cutting means pre-cut out a vertical slot in the ground to allow a subsoiler to entry into the ground more easily and to break up and penetrate the soil and to cause erosion of the soil, which flows upwards and outwards on the sides of the subsoiler. During operation, the chisel of the subsoiler is located at a point under the first wheel, so that the soil does not depart from the ground in an uncontrolled way but in a relatively limited way, since the first wheel exerts considerable force on the soil when it is kneaded by the subsoiler. Thus, the means supporting and carrying the machine also function as an integral part of the cultivation operation, that is they control the flow of the soil when it is loosened by the subsoiler. The fertiliser may be applied directly downstream of the subsoiler.

The patent no. PL 231360 B1 discloses a strip-till device comprising a frame to which, in the order of passage of the strip-till device, working tools are connected: splitting and tearing discs, disc coulter, star-shaped diffuser, loosening tine, closing discs and compaction and levelling roller. The splitting and tearing discs are mounted at an angle such that the distance between the discs is smaller in the lower part and greater in the upper part. The aim of the splitting and tearing discs is to tear and disperse the mulch on the sides, thereby discovering the soil. The disc coulter is responsible for cutting the mulch residues and cutting the soil to a depth of 5 to 15 cm and is in the form of a disc with embossed areas forming a wave on the outer part. Furthermore, the finger row cleaner finally cleans the soil strip. The loosening tine is equipped with a fertiliser coulter and connected to the support frame by a double-acting actuator. Behind the loosening tine there are closing discs which close the slot formed by the operation of the loosening tine. The last soil cultivation working tool is a compacting and levelling roller which compacts and levels the soil and prevents the formation of air pockets.

The object of the invention is to solve technical and technological problems resulting from insufFicient adaptation of known strip-till machines and devices for preparation of the soil for seeding and subsequent vegetable cultivation. Vegetable grains are small in size, especially when compared to maize grains, which are often seeded in strip-till systems. Thus, the hitherto well-known strip-till devices leave the improper structure of the soil after cultivation, not adapted to grains of vegetables of small size and having, above all, too large earth lumps and clods to provide the right conditions for the germination and growth of vegetables.

The subject of the invention is a strip-till device, comprising a main frame configured to connect to an agricultural tractor and comprising soil cultivation working tools arranged in rows, including splitting and tearing discs, a disc coulter, a loosening tine with a fertiliser coulter, a finger row cleaner and/or cultivating firming discs and a compacting and levelling roller. The essence of the invention is that in a row of soil cultivation working tools there is at least one tiller, wherein soil cultivation working tools in a single row are arranged in the following order: splitting and tearing discs, disc coulter, loosening tine with fertiliser coulter, finger row cleaner and/or cultivating firming discs, the tiller and compacting and levelling roller.

Preferably, the tiller is driven.

It is good if the tiller has either hydraulic or mechanical drive. When the tiller is mechanically driven, the strip-till device comprises a power take-off shaft, on one end designed to connect to the output of the power take-off shaft of the agricultural tractor, while on the other end connected by transmission with the drive of the tiller.

It is appropriate that the strip-till device comprises a post-seeding harrow with post-seeding harrow support wheels or a vegetable seeder mounted behind of the compacting and levelling roller.

Equally well is when the strip-till device comprises working sections detachably and slidably connected to the main frame, wherein the splitting and tearing discs, the disc coulter, the loosening tine with the fertiliser coulter and the finger row cleaner are mounted on the working sections.

It is then advantageous when adjacent working sections are mounted with offset one to another in a straight line parallel to the direction of movement of the device.

It is appropriate that the compacting and levelling roller is a wheel compacting and levelling roller adapted to perform transport functions. Alternatively, the compacting and levelling roller consists of rings while the device is equipped with transport wheels.

Preferably, the main frame has a lifting bracket to which a lifting frame is pivotally connected, having the mounted compacting and levelling roller; wherein the lifting bracket has at least one hydraulic cylinder connected to the lifting frame.

It is desirable that the lifting bracket has a three-point linkage system configured to mount at least a post-seeding harrow or a vegetable seeder.

It is also good if the main frame comprises a settlement plate. Then, preferably, the settlement plate is connected to the fertiliser tank with the fertiliser applicator; wherein the fertiliser applicator is connected by conduits to the fertiliser coulters.

The main advantage of the invention is to provide optimal conditions for the growth and germination of vegetable seeds, which results from the sequence of working tools for soil strip-till and from the tiller used in the device. Such a set of working tools, finished with a tiller, leaves behind soil strips with a granular structure in the top layer for sowing, while being deeply aerated and having a deep-applied fertiliser, which favours sprouting of the grains and the subsequent deep rooting of the vegetables. In the longer term, soil cultivated this way prolongs the period of vegetable growth and yields higher crops. In particular, the tiller favourably influences the soil by shredding, loosening and mixing it with vegetable residues, leaving the granular structure in the upper 2-3 cm layer of the soil. The granular structure of soil is also promoted by plant residues remaining in the field in the strip-till system. Moreover, tillage in the strip-till system prevents wind erosion and water erosion and, thanks to the mulch, the soil is heated much less in summer than in traditional cultivation systems. After the strip-till device has passed, the soil is also less compacted than in traditional cultivation systems, making it easier to harvest later. The use of a finger row cleaner and/or closing discs in a strip-till device allows the mulch to be further spread to inter-rows with a finger row cleaner or allows to close by closing discs the strip of the deeply cultivated soil with a loosening tine. Whether a finger row cleaner or a closing discs are used, a strip of soil is formed which is then cultivated with a tiller leaving the granular structure.

The use of a driven, active tiller in the device allows its operation to be independent of the speed of an agricultural tractor and to be adapted to field conditions. The alternative use of hydraulic, or mechanical drives using a power take-off shaft, configures the device for typical solutions used in agriculture and agricultural tractors and thus ensures the versatility of the device.

The use of a post-seeding harrow behind a compacting and levelling roller, which loosens soil on a low depth soil in cultivated strips, accelerates the drying of the upper soil layer and improves the conditions for vegetable seeding. Vegetable sowing may take place after the upper layer of the soil has dried slightly and relatively quickly, thus avoiding too humid soils, which may clog the seeder coulters of the vegetable seeder during sowing. The use of post-seeding harrow also eliminates leaving behind the device a levelled, compacted soil which dries longer before seeding and, in the event of high sunshine, tends to form a soil shell that damages the granular structure and worsens the gaseous exchange between the soil and the atmosphere. In turn, equipping the post-seeding harrow with post-seeding harrow support wheels ensures active ground copying and efficient operation of the device. The device is also configured to attach a seeding attachment behind a compacting and levelling roller, which allows performing soil cultivation and sowing in a single passage of a strip-till device, but experience has shown that it can be carried out primarily on soils which, without drying, will not clog seeding coulters of a vegetable seeder.

It is also advantageous that tillage working tools are mounted on the working sections, which allows for quick replacement of the individual sections together with the working tools mounted thereon, as well as adjustment of the position of the individual working sections on the device, including application of the position when the working tools in individual row are offset one to another in a straight line parallel to the direction of movement of the device.

The necessity to use additional transport wheels can be eliminated by forming a compacting and levelling roller as a wheel roller adapted to act as transport wheels. This construction also limits the length of the whole device. Alternatively, compacting and levelling rollers consisting of rings may be used in a strip-till device. In this case, the strip-till device is equipped with transport wheels.

On the other hand, providing the device with a lifting frame enables a simple position adjustment of individual parts of the device, while the use of a three-point linkage system enables the device to be extended to consist further agricultural devices and to adapt them to the cultivation of the soil in a single run.

The use of a settlement plate in the device allows mounting additional components thereon, in particular one or two chamber fertiliser tank with a fertiliser applicator which is connected to fertiliser coulters mounted directly behind the loosening tine. The fertiliser is then applied deep to the ground, even to a depth of 34 centimetres, which, combined with deep loosening and aeration, promotes the deep rooting and growth of vegetables.

The invention is presented in embodiments and in a drawing showing at the:

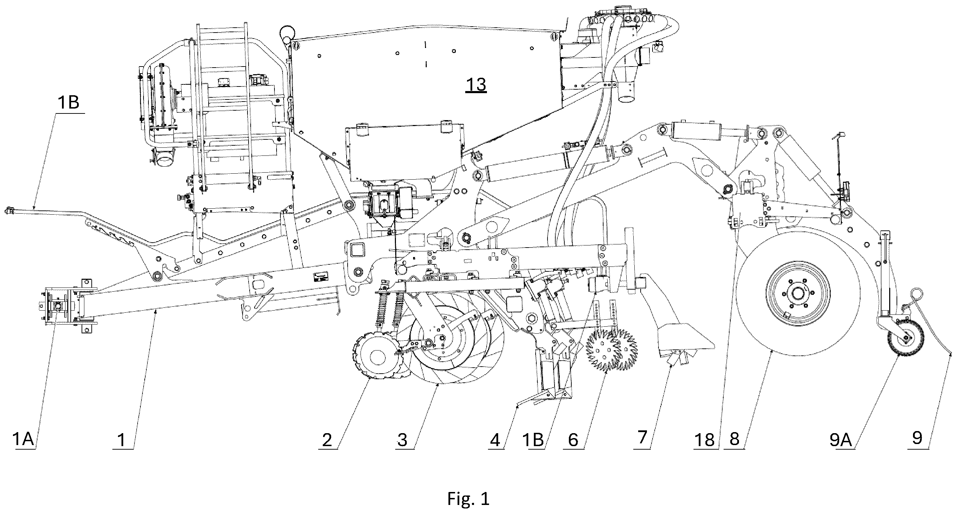

Fig. 1- a strip-till device in the first embodiment, in a side view,

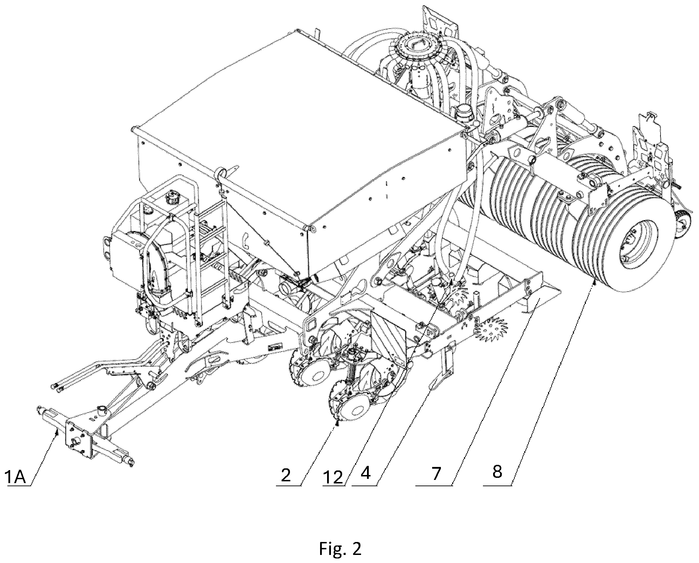

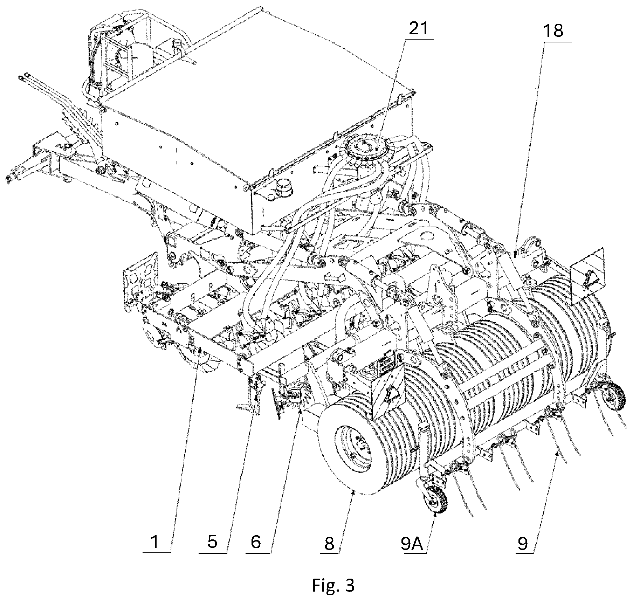

Fig. 2 - 3 - a strip-till device in the first embodiment, in a perspective views,

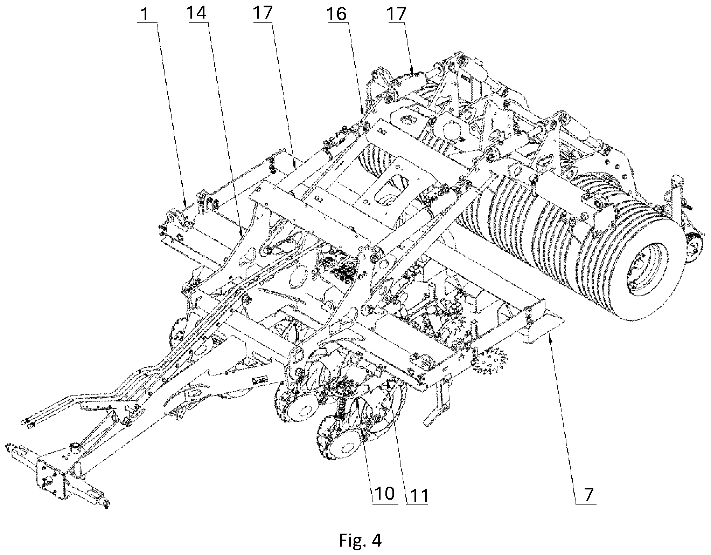

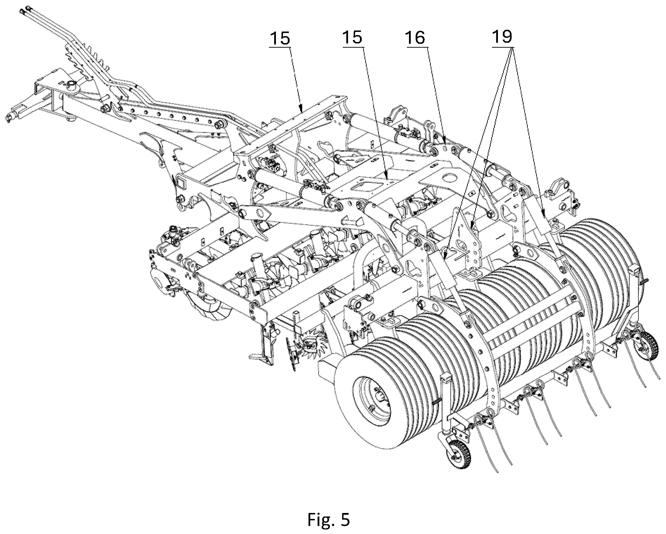

Fig. 4 - 5 strip-till device in the first embodiment, without a fertiliser tank, in a perspective views,

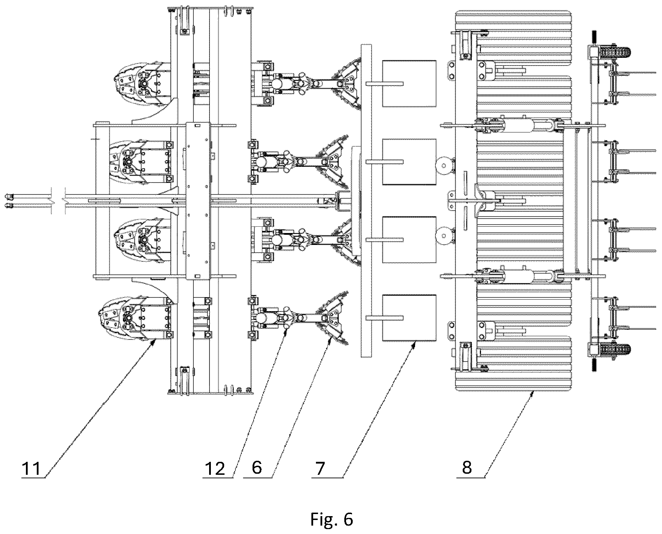

Fig. 6 - a strip-till device in the first embodiment, without a fertiliser tank, in a top view,

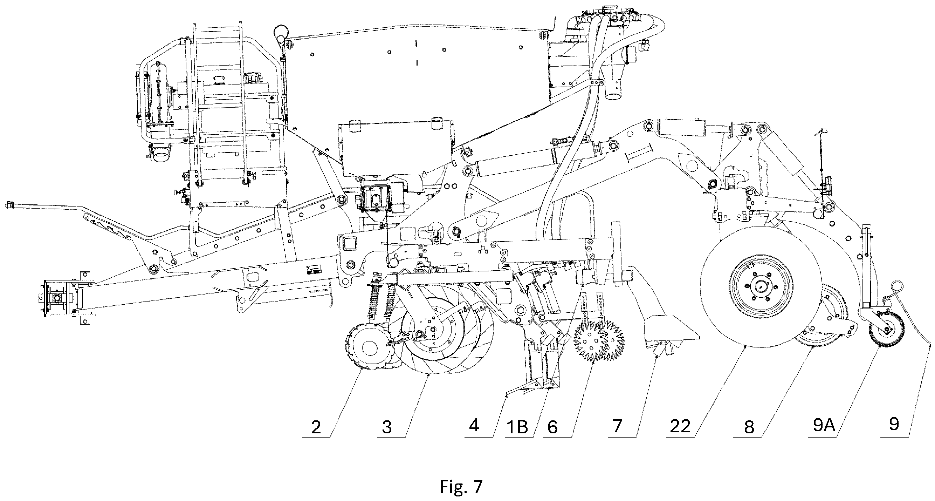

Fig. 7 - a strip-till device in the second embodiment, in a side view,

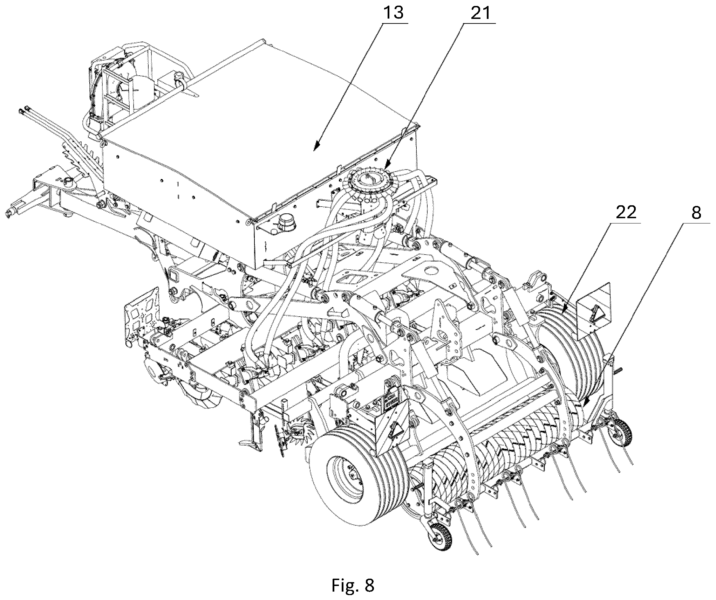

Fig. 8 - a strip-till device in the second embodiment, in a perspective view,

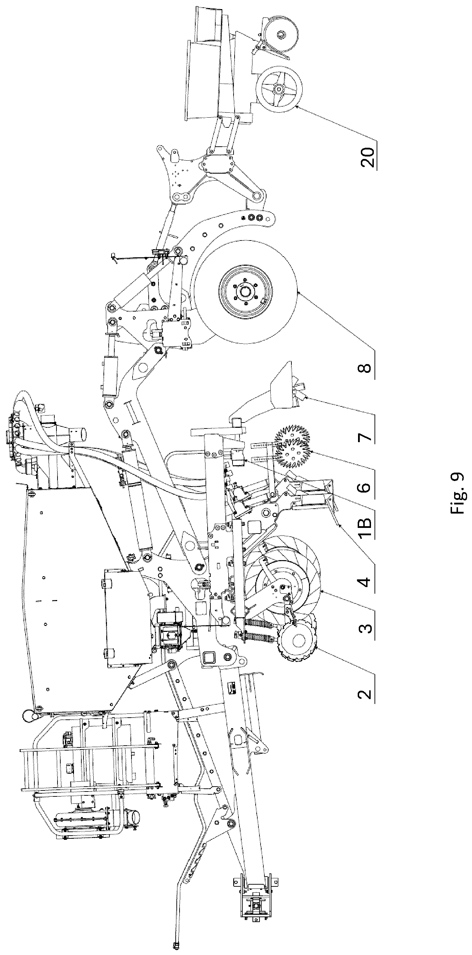

Fig. 9 - a strip-till device in the third embodiment, in a side view,

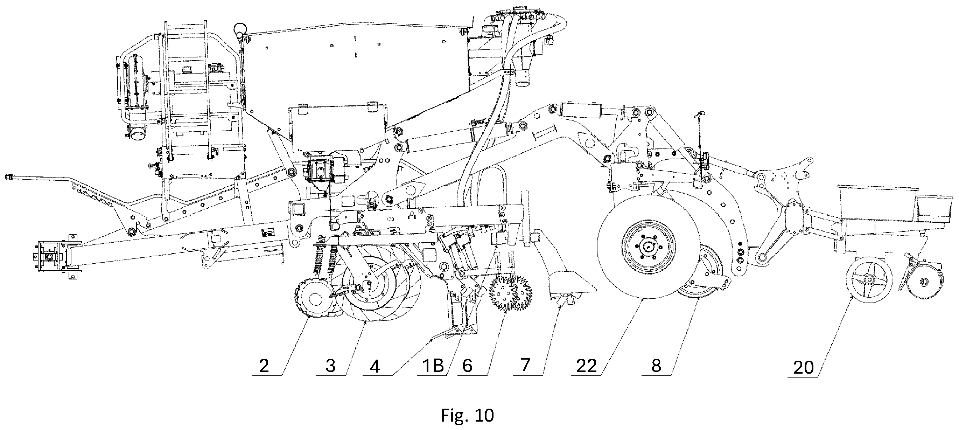

Fig. 10 - a strip-till device in the fourth embodiment, in a side view,

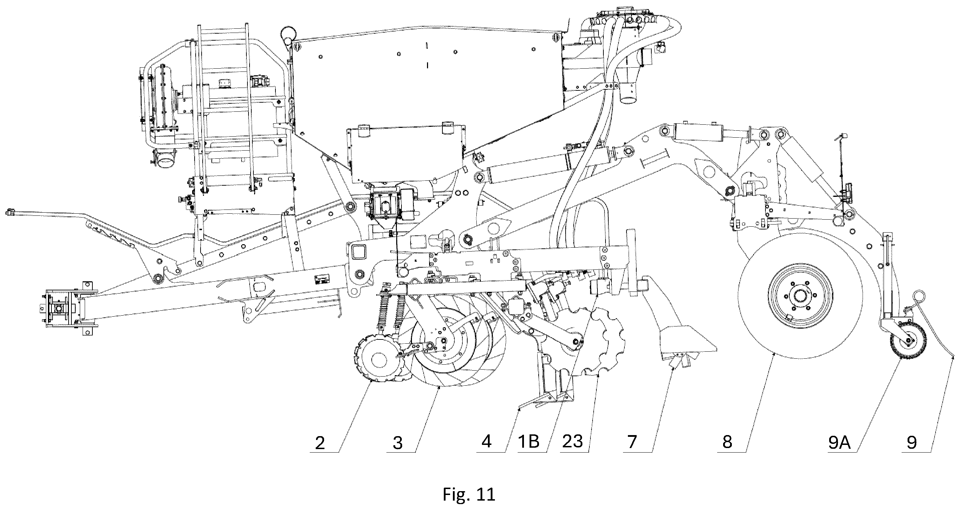

Fig. 11- a strip-till device in the fifth embodiment, in a side view.

### First embodiment

The strip-till device comprises a main frame 1 configured for connection to an agricultural tractor. For this purpose, main frame 1 has a drawbar 1A configured for attachment to the three-point linkage system of an agricultural tractor, as well as a hydraulic system 1B comprising a hydraulic manifold with connectors to be connected to hydraulic conduits to the outputs of the hydraulic system of an agricultural tractor. Hydraulic system in the strip-till device is used to control all of its moving or driven components.

In other embodiments, a mechanical transmission system based on articulated power take-off shafts and suitable gears may be used instead of hydraulic system 1B. This drive solution is commonly used in agricultural machinery and devices.

The strip-till device consists of four parallel rows of soil cultivation working tools . The working tools are connected to a strip-till device in the following order: splitting and tearing discs 2, disc coulter 3, loosening tine 4 with fertiliser coulter 5, finger row cleaner 6, tiller 7, compacting and levelling roller 8 and post-seeding harrow 9.

The splitting and tearing discs 2 form the first line of operation of the strip-till device and their role is to clean the soil strip. A disc coulter 3 with embossing is then used, which, after pre-ripping the remaining vegetation and revealing the soil strip, cuts the soil to a depth of up to 12 centimetres. Disc coulter 3 takes the form of a rim with a cutting edge with embossed areas, which increases the range of lateral operation, and the incision formed in the soil in a top view is similar in shape to a wave. Furthermore, embossed areas on the cutting edge improve the resistance of the disc coulter 3 to deformation. Behind the disc coulter 3 there is a loosening tine 4, the purpose of which is deep loosening of the cultivated soil up to a depth of 35 cm. Directly downstream of the loosening tine 4 there is mounted a fertiliser coulter 5 to apply fertilisers even at a depth of 34 cm. As the next working tool, a finger row cleaner 6 is used to move away from the seeding strip post-harvest residues, including straw and mulch, and to leave the cleaned soil strip, from which post-harvest residues are moved into the inter-rows. The next soil cultivation working tool is a driven, active tiller 7 with a width corresponding to the width of the soil strip cultivated. The tiller 7 cultivates the upper soil layer at a depth of 2-3 centimetres, leaving a loosened and shredded soil of a granular structure adapted for vegetable seeding. Another soil cultivation working tool is a compacting and levelling roller 8 levelling the cultivated soil and pressing stones or small earth clods into the soil. The compacting and levelling roller 8 is followed by a post-seeding harrow 9 shallowly loosening the soil over the width of the cultivated soil strip, which accelerates its drying prior vegetable sowing performed in a separate stage.

Splitting and tearing discs 2, disc coulter 3, loosening tine 4 with fertiliser coulter 5 and finger row cleaner 6 are mounted on working sections 10 which are detachably and slidably connected to the main frame 1. The strip-till device comprises four working sections 10 corresponding to four rows in which the soil cultivation working tool are arranged. Each working section 10 has its own support frame 11 via which it is connected to the main frame 1. For mounting the working sections 10 on the strip-till device, handles mounted on the support frame 11 of the working section 10 are used.

In each row, the splitting and tearing discs 2 are formed by a pair of splitting and tearing discs 2 tilted one to another and having a common body that is connected by a damper to the support frame 11. The damper is able to adjust the pressing force of the splitting and tearing discs 2 and adapt it to the conditions in which the strip-till device operates. This translates into active site copying. The front edges of the splitting and tearing discs 2 may be offset one to another in a straight line parallel to the direction of movement of the working section 10. The splitting and tearing discs arranged this way are automatically cleaned from soil and plant residues. In the embodiment, the front edges of the splitting and tearing discs 2 are mounted with such an offset and also equipped with scrapers cleaning said discs from the soil and residual plants.

The disc coulter 3 is connected to the support frame 11 by a support. In the part of the support frame 11 in turn, downstream of the disc coulter 3, a bracket of the loosening tine 4 is mounted. In the bracket of the loosening tine 4 a loosening tine 4 is pivotally mounted with a fertiliser coulter 5 mounted to the rear part of the loosening tine 4. The loosening tine 4 has replaceable working elements. Furthermore, a double-acting hydraulic actuator connected to the loosening tine 4 is mounted on the bracket of the loosening tine 4. By using the hydraulic actuator, the position of the loosening tine 4 is controlled and at the same time the use of the hydraulic actuator protects the loosening tine 4 from damage.

In addition, the loosening tine 4 bracket is connected to a holder with a fertiliser distributor 12 attached. Fertiliser distributor 12 has three inlet ports to connect the fertiliser supply conduits and an outlet to connect the supply conduit connecting fertiliser distributor 12 with fertiliser coulter 5. One of the inlet ports of the fertiliser distributor 12 has a venting function, so that two inlets can be connected to the fertiliser supply conduits. Fertiliser coulter 5 has an inlet to connect the supply conduit from the fertiliser distributor, while an outlet of the fertiliser coulter 5 is intended to feed fertiliser into the soil, so that fertiliser can be introduced across the entire cross-section of the cultivated strip. Fertiliser distributor 12 can supply different types of fertiliser, even liquid fertiliser such as liquid manure, to the fertiliser coulter 5. Two separate fertiliser tanks 13 with fertiliser located on the strip-till device may be connected to fertiliser distributor 12. Fertiliser coulter 5, combined with fertiliser distributor 12, performs the task of draining air out of the soil being loosened.

Behind of the loosening tine 4, also with the use of the loosening tine 4 bracket, a finger row cleaner 6 is connected to the support frame 11 of the working section 10. A single finger row cleaner comprises two finger discs which are oriented concurrently toward one to another, according to the direction of movement of the device. This orientation of the discs results in the post-harvest residues being moved away from the cultivated soil strip into the inter-rows. Each disc is mounted on a corresponding holder with an adjustable position, and the holder is connected to the loosening tine support.

In the embodiment, the working sections 10 with the working tools are offset one to another in a straight line parallel 1 to the direction of movement of the strip-till device, which improves the performance of the individual working tools. It is also possible to mount the working sections 10 on the main frame 1 without an offset, where the working tools in each row are arranged in the same straight line parallel to the direction of movement of the strip-till device.

In order to ensure the best possible cleaning of working tools from the soil and plant residues, not only the splitting and tearing discs 2, but also the disc coulter 3 is equipped with cleaning scrapers.

On the main frame 1 beam, immediately behind each working section 10 with working tools, a tiller 7 is mounted. The tiller 7 is hydraulically driven and for this purpose it is connected by hydraulic conduits with a hydraulic manifold. This ensures an adequate operating speed of the working parts allowing the soil cultivated to be shredded and to have a granular structure. The speed of operation of the working parts of the tiller 7 is independent of the speed of movement of the agricultural tractor to which the strip-till device will be connected.

In other embodiments, the main frame 1 may be equipped with an additional bracket for mounting a tiller. In case of this design, the tiller is connected to the main frame 1, while the additional bracket for mounting the tiller is connected to the tiller 7 by a damper enabling the pressuring force and depth of the operation of the tiller 7 to be adjusted to the conditions in which the strip-till device operates. Preferably, an adjustable spring damper is used in this design.

Main frame 1 also comprises two fixed lifting brackets 14. Lifting brackets 14 are additionally connected one to another by a settlement plate 15 allowing additional components to be attached to the strip-till device. Each lifting bracket 14 has a pivotally mounted arm of the lifting frame 16 and a hydraulic cylinder 17 to control the position, lowering and lifting the lifting frame 16. On the lifting frame 16, a beam 18 is mounted on which a compacting and levelling roller 8 is mounted. The compacting and levelling roller 8 is in the form of a compacting and levelling roller 8 which, by means of pneumatically inflated tyres, is adapted to perform the transport function of the whole strip-till device. Thus, it performs two functions. During field works, it is a compacting and levelling roller, and during travels it performs transport functions.

On the beam 18 attached to the lifting frame 14, there is also a three-point linkage system 19 configured to mount a post-seeding harrow 9 or a vegetable seeder 20. In the embodiment, the post-seeding harrow 9 was mounted to the three-point linkage system 19, having pairs of rakes mounted in the cultivated soil rows. The post-seeding harrow 9 is the last soil cultivation working tool in the strip-till device. After the strip-till device has passed, soil strips with a granular structure remain on the field, which are prepared for sowing vegetables. Depending on the soil conditions, vegetable sowing may take place in the strips thus prepared either immediately after the passage of the strip-till device or after a short period of soil drying, which is further accelerated by a shallow loosening of the soil by the post-seeding harrow 9. The post-seeding harrow 9 itself is equipped with a pair of adjustable post-seeding harrow support wheels 9A that are used during the tillage to actively copy the ground with the post-seeding harrow 9.

On the settlement plate 15, a two-chamber fertiliser tank 13 with a fertiliser applicator 21 was mounted. Fertiliser from the fertiliser tank 13 is delivered by the fertiliser applicator 21 via conduits to the fertiliser distributor 12 in each working section 10 and then to the fertiliser coulter 5.

### Second embodiment

In the second embodiment, the strip-till device has a design as in the first embodiment. Therefore, it has working tools mounted to the main frame 1 in the form of the splitting and tearing disc 2, the disc coulter 3, the loosening tine 4 with the fertiliser coulter 5, the finger row cleaner 6, the tiller 7, the compacting and levelling roller 8 and the post-seeding harrow 9.

In this embodiment, the compacting and levelling roller 8 consisting of metal rings forming the cylinder of the compacting and levelling roller 8, was used. As in the first embodiment, the compacting and levelling roller is mounted to the beam 18 connected to the lifting frame 16. The compacting and levelling roller 8 is connected to the beam 18 by hydraulic cylinders ensuring that it can be lifted, lowered and adjusted. In order to perform transport functions, transport wheels 22 have been mounted on both sides to the beam 18 mounted to the lifting frame 16. The post-seeding harrow 9 is attached behind of the compacting and levelling roller 8.

### Third embodiment

In the third embodiment, the strip-till device has a design as in the first embodiment. Therefore, it has working tools mounted to the main frame 1 in the form of the splitting and tearing disc 2, the disc coulter 3, the loosening tine 4 with the fertiliser coulter 5, the finger row cleaner 6, the tiller 7, as well as the compacting and levelling roller 8 in the form of a set of tyres. On the beam 18 mounted to the lifting frame 16A there is also mounted the three-point linkage system 19, configured to attach the post-seeding harrow 9 or a vegetable seeder 20. In this embodiment, instead of the post-seeding harrow 9, the vegetable seeder 20 was mounted on the three-point linkage system 19. The strip-till device constructed according to the third embodiment enables all soil cultivation, including vegetable seeding, during one passage of the strip-till device. The use of the strip-till device and the use of the soil cultivation in a single passage, and thus the simultaneous seeding of vegetables, depends on soil conditions.

### Fourth embodiment

In the fourth embodiment, the strip-till device has a design as in the second embodiment and comprises the compacting and levelling roller 8 consisting of rings forming a compacting and levelling roller and transport wheels 22.

In the fourth embodiment, instead of the post-seeding harrow 9, the vegetable seeder 20 was mounted on the three-point linkage system 19. The strip-till device constructed according to the fourth embodiment enables soil cultivation, including vegetable seeding, during one passage of the strip-till device.

### Fifth embodiment

In the fifth embodiment, the strip-till device has a design as in the first embodiment. In this embodiment, in each working section 10, the cultivating firming discs 23 are mounted instead of the finger row cleaner 6. The cultivating firming discs 23 are positioned concurrently toward one to another in the direction of the passage of the strip-till device and are designed to close the slot formed by the loosening tine 4 and to prepare the soil strip for further cultivation with the tiller 7.

### List of indications

1. Main frame
1A. Drawbar
1B. Hydraulic system
2. Splitting and tearing discs
3. Disc coulter
4. Loosening tine
5. Fertiliser coulter
6. Finger row cleaner
7. Tiller
8. Compacting and levelling roller
9. Post-seeding harrow
9A Post-seeding harrow support wheel
10. Working sections
11. Support frame of the working section
12. Fertiliser distributor
13. Fertiliser tank
14. Lifting bracket
15. Settling plate
16. Lifting frame
17. Hydraulic cylinder
18. Beam
19. Three-point linkage system
20. Vegetable seeder
21. Fertiliser applicator
22. Transport wheels
23. Cultivating firming discs

## Claims

1. A strip-till device, comprising a main frame (1) configured to connect to an agricultural tractor and comprising soil cultivation working tools arranged in rows, including splitting and tearing discs (2), a disc coulter (3), a loosening tine (4) with a fertiliser coulter (5), a finger row cleaner (4) and/or cultivating firming discs (23) and a compacting and levelling roller (8), **characterised in that** the row of soil cultivation working tools comprises at least one tiller (7); wherein the soil cultivation working tools in a single row are arranged in the following order: the splitting and tearing discs (2), the disc coulter (3), the loosening tine (4) with the fertiliser coulter (5), the finger row cleaner (6) and/or cultivating firming discs (23), the tiller (7) and the compacting and levelling roller (8).

2. The strip-till device according to claim 1, **characterised in that** the tiller (7) is driven.

3. The strip-till device according to claim 2, **characterised in that** the tiller (7) has a hydraulic drive.

4. The strip-till device according to claim 2, **characterised in that** the tiller (7) has a mechanical drive, while the device comprises a power take-off shaft, on one end configured to connect to the output of the power take-off shaft of the agricultural tractor, and on the other end connected by a transmission with the drive of the tiller (7).

5. The strip-till device according to any one of claims 1 to 4, **characterised in that** it comprises a post-seeding harrow (9) with post-seeding harrow support wheels (9A) or a vegetable seeder (20) mounted downstream of the compacting and levelling roller (8).

6. The strip-till device according to any one of claims 1 to 5, **characterised in that** it comprises working sections (10) detachably and slidably connected to the main frame (1); wherein the splitting and tearing discs (2), the disc coulter (3), the loosening tine (4) with the fertiliser coulter (5) and the finger row cleaner (6) are mounted on the working sections (10).

7. The strip-till device according to claim 6, **characterised in that** the adjacent working sections (10) are mounted with offset one to another in a straight line parallel to the direction of movement of the device.

8. The strip-till device according to any one of claims 1 to 7, **characterised in that** the compacting and levelling roller (8) is a wheel compacting and levelling roller adapted to perform transport functions.

9. The strip-till device according to any one of claims 1 to 7 **characterised in that** the compacting and levelling roller (8) consists of rings, while the device is equipped with transport wheels (22).

10. The strip-till device according to any one of claims 1 to 9, **characterised in that** the main frame (1) has a lifting bracket (14) to which a lifting frame (16) is pivotally connected, having the mounted compacting and levelling roller (8); wherein the lifting bracket (14) has at least one hydraulic cylinder (17) connected to the lifting frame (16).

11. The strip-till device according to claim 10, **characterised in that** the lifting bracket (14) has the mounted three point linkage system (19), configured to mount at least the post-seeding harrow (9) or the vegetable seeder (20).

12. The strip-till device according to any one of claims 1 to 11, **characterised in that** the main frame (9) comprises a settlement plate (15).

13. The strip-till device according to claim 12, **characterised in that** a fertiliser tank (13) with a fertiliser applicator (21) is connected to the settlement plate (15); wherein the fertiliser applicator (21) is connected by conduits to the fertiliser coulters (5).
